(19) Europäisches Patentamt
European Patent Office
Office européen des brevets

(11) Veröffentlichungsnummer: **0 185 207**
**B1**

(12) # EUROPÄISCHE PATENTSCHRIFT

(45) Veröffentlichungstag der Patentschrift: **30.08.89**

(51) Int. Cl.⁴: **C 09 B 67/22**, C 09 B 29/20, D 06 P 1/18, D 06 P 3/84

(21) Anmeldenummer: **85114613.4**

(22) Anmeldetag: **18.11.85**

(54) **Farbstoffmischungen, Verfahren zu ihrer Herstellung und Verfahren zum Färben und Bedrucken von hydrophoben Fasermaterialien.**

(30) Priorität: **17.12.84 DE 3445930**

(43) Veröffentlichungstag der Anmeldung: **25.06.86 Patentblatt 86/26**

(45) Bekanntmachung des Hinweises auf die Patenterteilung: **30.08.89 Patentblatt 89/35**

(84) Benannte Vertragsstaaten: **CH DE FR GB IT LI**

(56) Entgegenhaltungen:
**BE-A- 676 309**
**FR-A- 1 275 797**
**FR-A- 2 305 475**
**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft**
**Hanauer Landstrasse 526**
**D-6000 Frankfurt am Main 61 (DE)**

(72) Erfinder: **Tappe, Horst, Dr.**
**Ringstrasse 9**
**D-6050 Dietzenbach (DE)**
Erfinder: **Hofmann, Klaus**
**Meerholzer Strasse 50**
**D-6000 Frankfurt am Main 61 (DE)**
Erfinder: **Hähnke, Manfred, Dr.**
**Behringstrasse 13**
**D-6233 Kelkheim (DE)**
Erfinder: **Bode, Albert**
**Finkenweg 1**
**D-6231 Schwalbach (DE)**

(74) Vertreter: **Urbach, Hans-Georg, Dr. et al**
**Hanauer Landstrasse 526**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 185 207 B1

Jouve, 18, rue St-Denis, 75001 Paris, France

**Beschreibung**

Aus der DE-B 12 85 443 ist ein Verfahren zum Färben und Bedrucken von Fasergut aus hochmolekularen Polyestern bekannt, bei dem der Farbstoff der Formel I

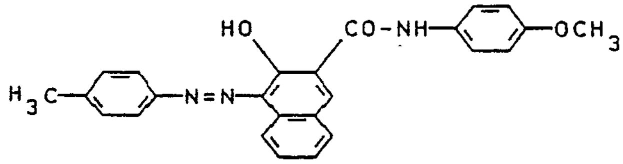

(I)

verwendet wird. Dieser Farbstoff liefert auf den Polyestermaterialien farbstarke scharlachfarbene Färbungen und Drucke mit guten Echtheitseigenschaften.

In der FR-A-2 305 475 ist erwähnt, daß z. B. die Farbstoffe der DE-B-1 285 443 beim Färben von Polyesterfasern verschiedene Wünsche, z. B. hinsichtlich Gleichmäßigkeit der Färbung, offenlassen und auch zu langsam und unvollständig auf die Fasern aufziehen. Nach der FR-A-2 305 475 werden dabei zum Färben und Bedrucken von Textilmaterialien aus aromatischen Polyestern Farbstoffmischungen verwendet, die mindestens 2 Farbstoffe der Formel

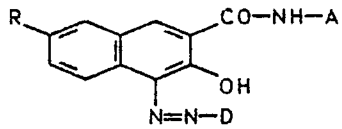

enthalten, wobei D ein von Sulfo- oder Carboxy-Gruppen freier Rest einer diazotierbaren Verbindung der Benzolreihe ist, der durch einen oder mehrere gegebenenfalls substituierte Alkyl-, Alkoxy-, Alkoxyalkyl-, Acyloxy-, Alkylcarbonyl- und/oder Alkoxycarbonyl-Reste und/oder ein Halogenatom substituiert sein kann, R ein Wasserstoffatom, ein Halogenatom oder einen gegebenenfalls substituierten Alkoxyrest und A einen aromatischen Rest darstellt, der durch einen oder zwei gegebenenfalls substituierte Alkyl- und/oder Alkoxy-Reste und/oder ein Halogenatom substituiert sein kann.

Es wurde nun überraschenderweise gefunden, daß die coloristischen Eigenschaften des Farbstoffs der Formel I, insbesondere sein Zieh- und Aufbauvermögen, weiter erheblich verbessert werden können, wenn er zum Färben und Bedrucken von hydrophobem Fasermaterial in Mischung mit dem Farbstoff der Formel II

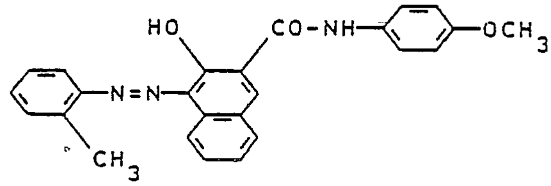

(II)

zur Anwendung kommt.

Die erfindungsgemäßen Farbstoffmischungen liefern gegenüber den Farbstoffmischungen der FR-A-2305 475 Färbungen mit wesentlich verbesserter Gleichmäßigkeit und rascherem Aufziehverhalten.

In den erfindungsgemäßen Farbstoffmischungen beträgt das Gewichtsverhältnis zwischen den Farbstoffen I und II = (80 bis 60) : (20 bis 40). Vorzugsweise beträgt das Gewichtsverhältnis der Farbstoffe I : II = 70 : 30.

Die erfindungsgemäßen Farbstoffmischungen werden zum Färben und Bedrucken von hydrophoben Fasermaterialien verwendet.

Die erfindungsgemäßen Farbstoffmischungen enthalten oder bestehen aus den beiden Farbstoffen I und II. Die vorstehend genannten Gewichtsverhältnisse beziehen sich lediglich auf den aus den Farbstoffen I und II bestehenden Anteil der erfindungsgemäßen Farbstoffmischungen. Die erfindungsgemäßen Farbstoffmischungen können darüberhinaus auch noch Stellmittel und/oder Hilfsmittel und gegebenenfalls noch andere Farbstoffe enthalten.

Die erfindungsgemäßen Farbstoffmischungen können in Pulver- oder in Teigform vorliegen. Die pulverförmigen Farbstoffzubereitungen besitzen normalerweise einen Farbstoffgehalt von 30 bis 50 Gew. %. Der Rest besteht aus Stell- und/oder Hilfsmitteln, wie z. B. Dispergiermittel, Netzmittel, Emulgatoren, Entstaubungsmittel etc. Die in wäßriger Suspension vorliegenden teigförmigen Farbstoffzubereitungen besitzen normalerweise einen Farbstoffgehalt von 20 bis 50 Gew. %, einen Stell- und/oder Hilfsmittelgehalt von 20 bis 30 Gew. %, der Rest ist Wasser. Als Hilfsmittel können die teigförmigen Farbstoffzubereitungen neben Dispergiermitteln, Emulgatoren und Netzmittel auch noch Eintrocknungsverzögerer, wie z. B. Glykole oder Glyzerin, und Konservierungsmittel oder Fungizide enthalten.

Die erfindungsgemäßen Farbstoffmischungen können nach verschiedenen Verfahren hergestellt werden, so z. B. durch Mischen von bereits gefinishten Einzelfarbstoffen I und II oder durch Mischen von ungefinishten Einzelfarbstoffen I und II und anschließendem oder während des Mischvorgangs durchgeführtem Finish. Das Mischen von ungefinishten Einzelfarbstoffen I und II wird vorzugsweise unter Zusatz von Dispergiermitteln und gegebenenfalls weiteren Hilfsmitteln durchgeführt. Dieser Mischprozeß erfolgt zweckmäßigerweise im Zusammenhang mit der für den Finish von Dispersionsfarbstoffen durchzuführenden Naßzerkleinerung bei Temperaturen von 0 bis 190 °C, zweckmäßigerweise in geeigneten Mühlen, beispielsweise Kolloid-, Kugel-, Perl- oder Sandmühlen oder Dispersionsknetern, kann aber auch insbesondere bei bereits gefinishten Einzelfarbstoffen I und II durch Mischen mit der Hand oder durch Einrühren in Dispergiermittel oder Färbeflotten oder durch Einarbeiten in Druckpasten bewirkt werden.

Bei der Naßzerkleinerung der Farbstoffe werden die Farbstoffe zusammen mit Dispergiermitteln in einem flüssigen Medium, vorzugsweise in Wasser, aufgeschlämmt und die Mischung der Einwirkung von Scherkräften ausgesetzt. Dabei werden die ursprünglich vorhandenen Farbstoff-Teilchen mechanisch so weit zerkleinert, daß eine optimale spezifische Oberfläche erreicht wird und die Sedimentation der Farbstoffe möglichst gering ist. Die Teilchengröße der Farbstoffe liegt im allgemeinen bei etwa 0,1 bis 10 µm.

Die bei der Naßzerkleinerung mitverwendeten Dispergiermittel können nichtionogen oder anionaktiv sein. Nichtionogene Dispergiermittel sind z. B. Umsetzungprodukte von Alkylenoxiden, wie z. B. Ethylen- oder Propylenoxid mit alkylierbaren Verbindungen, wie z. B. Fettalkoholen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglykolethersulfate.

Die bei der Naßzerkleinerung erhaltenen Farbstoffdispersionen sollen für die meisten Anwendungsweisen gießbar sein und können auch noch weitere Hilfsmittel enthalten, z. B. solche, die als Oxydationsmittel wirken, wie z. B. Natrium-m-nitrobenzolsulfonat oder fungizide Mittel, wie z. B. Natriumo-phenyl-phenolat und Natrium-penta-chlorphenolat.

Die so erhaltenen Farbstoffdispersionen können sehr vorteilhaft zum Ansatz von Druckpasten und Färbeflotten verwendet werden. Besondere Vorteile bieten sie z. B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z. B. Netz-, Oxydations-, Konservierungs- und Entstaubungsmittel.

Ein Herstellungsverfahren für pulverförmige Farbstoffzubereitungen besteht darin, daß den oben beschriebenen flüssigen Farbstoffdispersionen die Flüssigkeit entzogen wird, z. B. durch Vakuumtrocknung, Gefriertrocknung, durch Trocknung auf Walzentrocknern, vorzugsweise aber durch Sprühtrocknung.

Sollen die Farbstoffe für den Textildruck herangezogen werden, so werden die erforderlichen Mengen der Farbstoffeinstellungen zusammen mit Verdickungsmitteln, wie z. B. Alkali-Alginaten oder dergl., und gegebenenfalls weiteren Zusätzen, wie Fixierbeschleunigern, Netzmitteln und Oxydationsmitteln, zu Druckpasten verknetet.

Vorzugsweise werden die erfindungsgemäßen Farbstoffmischungen dadurch hergestellt, daß ein Gemisch von p-Toluidin und o-Toluidin im Gewichtsverhältnis (80 bis 60) : (20 bis 40), vorzugsweise 70 : 30, in an sich bekannter Weise diazotiert und anschließend auf die Kupplungskomponente 3-Hydroxy-2-naphthoesäure-p-anisidid der Formel III

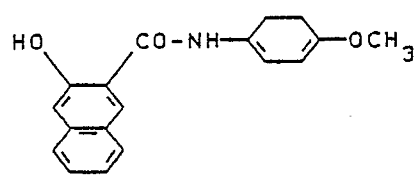

(III)

gekuppelt wird. Die erhaltene Farbstoffmischung wird in an sich bekannter Weise isoliert und in eine pulver- oder teigförmige Farbstoffzubereitung überführt.

Die Diazotierung des Gemisches aus p- und o-Toluidin erfolgt in an sich bekannter Weise durch Einwirkung von salpetriger Säure oder anderen Nitrosoniumionen bildenden Systemen in einem sauren wäßrigen Medium, einer Niederalkancarbonsäure, wie z. B. Ameisensäure, Essigsäure oder Propionsäure oder deren Mischungen oder in einem organischen Lösungsmittel bei Temperaturen von 0 bis 40 °C.

Die Kupplung erfolgt ebenfalls in an sich bekannter Weise durch Vereinigung der erhaltenen Diazolösung mit einer Lösung der Kupplungskomponente III bei Temperaturen von 0 bis 40 °C, vorzugsweise 0 bis 25 °C, in einem geeigneten Lösungsmittel, wie z. B. einem Alkanol mit 1 bis 4 C-Atomen, Dimethylformamid, vorzugsweise in mit Lauge alkalisch gestelltem Wasser, gegebenenfalls auch in Gegenwart eines mit Wasser begrenzt mischbaren Alkanols. Die Kupplung ist nach einigen Stunden beendet, und das Gemisch der Farbstoffe der Formel I und II kann wie üblich isoliert, getrocknet und auf die bereits erwähnte Art und Weise in eine pulver- oder teigförmige Zubereitung überführt werden.

Der Einzelfarbstoff der Formel II ist, soweit ersichtlich, in der Literatur noch nicht beschrieben. Er

kann leicht durch Diazotierung von o-Toluidin und anschließende Kupplung auf 3-Hydroxy-2-naphthoesäure-p-anisidid der Formel III in analoger Weise hergestellt werden, wie dies für die Herstellung des Einzelfarbstoffs der Formel I bekannt oder vorstehend für die Herstellung des aus den Einzelfarbstoffen der Formel I und II bestehenden Gemisches beschrieben ist.

Die erfindungsgemäßen Farbstoffmischungen sind vorzüglich zum Färben und Bedrucken von hydrophoben synthetischen Fasermaterialien in lebhaften Scharlachtönen geeignet. Überraschenderweise sind vor allem die bevorzugten erfindungsgemäßen Farbstoffmischungen dem aus der DE-PS 12 85 443 bekannten Einzelfarbstoff im Hinblick auf färberisches Verhalten und coloristische Echtheiten überlegen. Die erfindungsgemäßen Farbstoffmischungen besitzen ein hervorragendes Egalisiervermögen und ein ausgezeichnetes Aufbau- und Ausziehvermögen, und die mit in ihnen hergestellten Färbungen und Drucke besitzen z. B. eine gute Lichtechtheit, Sublimierechtheit, Trockenhitzefixier- und -plissierechtheit, gute Naßechtheiten, wie z. B. Wasser-, Schweiß- und Waschechtheit. Die mit den erfindungsgemäßen Farbstoffmischungen hergestellten Färbungen und Drucke besitzen ferner eine gute pH-Stabilität, eine hohe Farbbrillanz und hohe Reinheit. Außerdem werden bei den erfindungsgemäßen Farbstoffmischungen auch bei einer Herabsetzung der Färbetemperaturen noch hervorragend farbstarke Färbungen bei ausgezeichneter Baderschöpfung erhalten. Die erfindungsgemäßen Farbstoffmischungen eignen sich auch gut zur Herstellung von Mischnuancen zusammen mit anderen Farbstoffen.

Als hydrophobe synthetische Materialien kommen z. B. in Betracht: Cellulose-2 1/2-Acetat, Cellulosetriacetat, Polyamide und besonders hochmolekulare Polyester, wie z. B. Polyethylengykolterephthalat, und deren Mischungen mit natürlichen Faserstoffen, wie z. B. Baumwolle, regenerierte Cellulosefasern oder Wolle.

Zur Herstellung der Färbeflotten werden die erforderlichen Mengen der Farbstoffeinstellungen mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel, zugesetzt.

Vorzugsweise werden die erfindungsgemäßenm Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Cellulosetriacetat eingesetzt. Diese Materialien können z. B. in Form von flächen-, flocken- oder fadenförmigen Gebilden vorliegen und z. B. zu Garnen oder gewebten oder gestrickten Textilstoffen verarbeitet sein. Das Färben des genannten Fasergutes mit den erfindungsgemäßen Farbstoffmischungen erfolgt in an sich bekannter Weise, vorzugsweise aus wäßriger Suspension, gegebenenfalls in Gegenwart von Carriern, zwischen 80 bis ca. 125 °C nach dem Ausziehverfahren, oder in Abwesenheit von Carriern nach dem HT-Verfahren im Färbeautoklav bei etwa 110 bis 140 °C, sowie nach dem sogenannten Thermofixierverfahren, wobei die Ware mit der Färbeflotte geklotzt und anschließend bei etwa 175 bis 230 °C fixiert wird. Das Bedrucken der genannten Materialien kann so durchgeführt werden, daß die mit erfindungsgemäßen Farbstoffmischungen enthaltenden Druckpasten bedruckte Ware zur Fixierung des Farbstoffs, gegebenenfalls in Gegenwart eines Carriers, bei Temperaturen zwischen ca. 110 bis 230 °C mit HT-Dampf, Druckdampf oder Trockenhitze behandelt wird. Man erhält auf diese Weise sehr farbstarke, scharlachfarbene egale Färbungen und Drucke mit sehr guten Echtheitseigenschaften.

Beim Färben mit erfindungsgemäßen Farbstoffmischungen nach dem HT-Verfahren kann die Färbetemperatur gegenüber dem Färben mit den aus der DE-OS 12 85 443 bekannten Einzelfarbstoffen bei gleich guten oder besseren coloristischen Effekten, z. B. von 130 °C auf 120 bis 125 °C gesenkt werden. Dabei tritt bei den erfindungsgemäßen Farbstoffmischungen außerdem noch eine wesentlich bessere Baderschöpfung ein. Überraschend war auch, daß die erfindungsgemäßen Farbstoffmischungen bei Färbungen nach dem Carrierverfahren ein besseres Aufbau- und Ausziehvermögen besitzen.

Sofern Textilmaterialien gefärbt oder bedruckt werden sollen, die neben den genannten hydrophoben synthetischen Fasern noch natürliche Fasern; insbesondere die oben genannten, enthalten, können die erfindungsgemäßen Farbstoffe und die erfindungsgemäßen Farbstoffmischungen auch mit anderen Farbstoffklassen, wie z. B. Küpen-, Direkt- oder Reaktivfarbstoffen, gemeinsam eingesetzt werden. Die Farbstoffe werden dann nach der Applizierung in an sich bekannter Weise gleichzeitig oder nacheinander fixiert.

Die folgenden Ausführungsbeispiele veranschaulichen die Herstellung der erfindungsgemäßen Farbstoffmischungen und Möglichkeiten zu ihrer Anwendung. Angegebene Prozente sind Gewichtsprozente, angegebene Teile sind Gewichtsteile.

Beispiel 1

7,5 g p-Toluidin und 3,2 g o-Toluidin werden in 90 ml Wasser und 30 ml konz. Salzsäure mit 14 ml 40 %iger Natriumnitritlösung und 80 g Eis diazotiert. Nach 1,5-stündigem Nachrühren gibt man die Diazolösung innerhalb von 30 min zu einer Lösung von 30,8 g 3-Hydroxy-2-naphthoesäure-anisidid (III) in 36 ml Wasser und 47 ml 27 %-iger Natronlauge. Nach einstündigem Nachrühren stellt man mit ca. 22 ml konz. Salzsäure auf pH 8,5, rührt 1 h bei 60 °C, filtriert heiß, wäscht und trocknet. Man erhält 41 g folgender Farbstoffmischung : 70 %

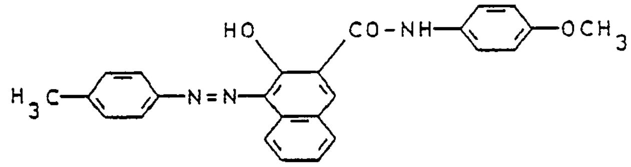

(I)

und 30 %

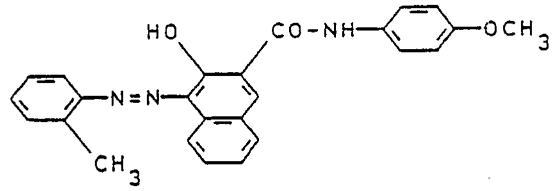

(II)

mit einem Schmelzbereich von 146 bis 154 °C.

Beispiel 2

Werden in Beispiel 1 anstelle von 7,5 g p-Toluidin 8,6 g p-Toluidin und anstelle von 3,2 g o-Toluidin 2,1 g o-Toluidin eingesetzt, dann erhält man eine Farbstoffmischung, die aus 80 % des Farbstoffs I und 20 % des Farbstoffs II besteht. Das Farbstoffgemisch besitzt einen Schmelzbereich von 154 bis 164 °C.

Beispiel 3

Werden in Beispiel 1 anstelle von 7,5 g p-Toluidin 6,4 g p-Toluidin und anstelle von 3,2 g o-Toluidin 4,3 g o-Toluidin eingesetzt, dann erhält man eine Farbstoffmischung, die aus 60 % des Farbstoffs I und aus 40 % des Farbstoffs II besteht. Das Farbstoffgemisch schmilzt unscharf um 164 °C.

Beispiel 4

1,0 g der nach Beispiel 1 erhaltenen Farbstoffmischung wird in einer Perlmühle unter Zusatz der doppelten Menge eines handelsüblichen Dispersionsmittels aus der Reihe der Ligninsulfonate fein dispergiert und dann in 2 000 g Wasser eingerührt. Die Dispersion wird mit 4,0 g Ammoniumsulfat und 2,0 g eines handelsüblichen Dispergiermittels auf Basis eines Naphthalinsulfonsäure-Formaldehyd-Kondensats versetzt und mit Essigsäure auf einen pH-Wert von 5 eingestellt.

In die so erhaltene Färbeflotte bringt man 100 g eines Polyestergewebes auf Basis von Polyethylenglykolterephthalat ein und färbt 1 h bei 130 °C.

Nach anschließendem Spülen, reduktiver Nachbehandlung mit einer mit Natronlauge auf pH 10 bis 11 gestellten 0,2- %igen Natriumdithionitlösung während 15 min bei 70 bis 80 °C, nochmaligem Spülen und Trocknen, erhält man eine klare farbstarke scharlachrote Färbung mit sehr guten coloristischen Eigenschaften.

Verwendet man anstelle der Farbstoffmischung des Beispiels 1 die Farbstoffmischungen der Beispiele 2 und 3, dann erhält man ähnliche Ergebnisse.

Beispiel 5

30 g der nach Beispiel 1 erhaltenen Farbstoffmischung werden in feiner Verteilung einer Druckpaste, die 45 g Johannisbrotkernmehl, 6,0 g 3-nitrobenzolsulfonsaures Natrium und 3,0 g Zitronensäure auf 1 000 g enthält, einverleibt. Mit dieser Druckpaste erhält man auf einem Polyestergewebe nach dem Bedrucken, Trocknen und Fixieren im Thermofixierrahmen während 45 sek bei 215 °C, Spülen und Fertigstellung, wie in Beispiel 4 beschrieben, einen farbstarken, scharlachroten Druck mit sehr guten coloristischen Eigenschaften, insbesondere sehr guter Licht-, Trockenhitzeplissier- und Trockenhitzefixierechtheit.

Verwendet man anstelle der Farbstoffmischung des Beispiels 1 die Farbstoffmischungen der Beispiele 2 und 3, dann erhält man ähnliche Ergebnisse.

Beispiel 6

Eine Gewebe aus Polyethylenglykolterephthalat wird auf dem Foulard bei 30 °C mit einer Flotte geklotzt, die 30 Gewichtsteile des nach Beispiel 1 erhaltenen und in feiner Verteilung gebrachten Farbstoffmischung, 1,0 g Polyacrylamid vom K-Wert 120 und 0,5 Gewichtsteile eines Polyglykolethers des Oleylalkohols und 968,5 g Wasser enthält. Nach dem Trocknen wird 60 sek bei 215 °C im Thermofixierrahmen fixiert. Nach anschließendem Spülen und Fertigstellung, wie im Beispiel 4 beschrieben, erhält man eine brillante Scharlach-Färbung von sehr guten Echtheitseigenschaften.

Verwendet man anstelle der Farbstoffmischung des Beispiels 1 die Farbstoffmischungen der Beispiele 2 und 3, dann erhält man ähnliche Ergebnisse.

Beispiel 7

Werden in Beispiel 1 anstelle von 7,5 g p-Toluidin und 3,2 g o-Toluidin 10,7 g o-Toluidin eingesetzt, dann erhält man den Farbstoff der Formel II mit einem Schmelzpunkt von 218 °C.

Durch Mischen dieses Farbstoffs mit dem Farbstoff der Formel I im erforderlichen Mengenverhältnis können erfindungsgemäße Farbstoffmischungen hergestellt werden.

Der Farbstoff der Formel II liefert auf hydrophoben Fasermaterialien nach den üblichen Färbe- und Druckverfahren scharlachrote Färbungen und Drucke.

## Patentansprüche

1. Mischung von Monoazofarbstoffen, dadurch gekennzeichnet, daß sie aus den Farbstoffen der Formel I

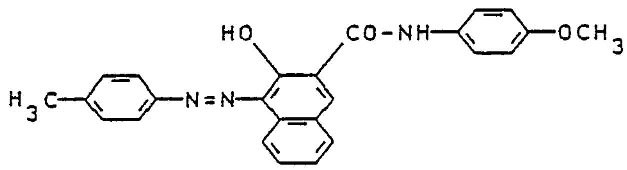

(I)

und der Formel II

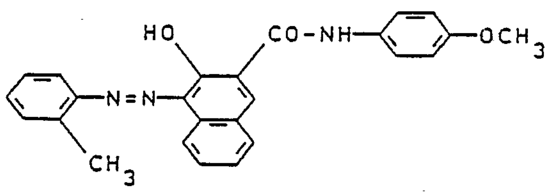

(II)

besteht oder diese Farbstoffe enthält und daß das Gewichtsverhältnis des Farbstoffs I zu dem Farbstoff II = (80 bis 60) : (20 bis 40) beträgt.

2. Mischung von Monoazofarbstoffen nach Anspruch 1 dadurch gekennzeichnet, daß das Gewichtsverhältnis des Farbstoffs I zu dem Farbstoff II = 70 : 30 beträgt.

3. Verfahren zur Herstellung der in Anspruch 1 und/oder 2 genannten Farbstoffmischung, dadurch gekennzeichnet, daß der Farbstoff der Formel I

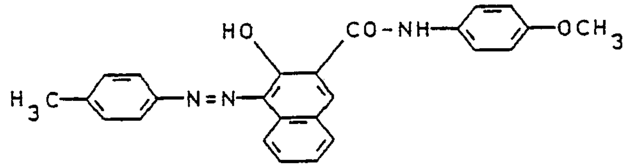

(I)

mit dem Farbstoff der Formel II

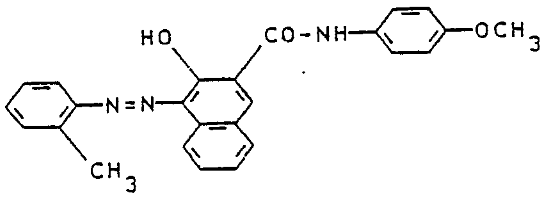

(II)

im Gewichtsverhältnis (80 bis 60) : (20 bis 40) gegebenenfalls unter Zusatz von Stell- und/oder Hilfsmitteln und gegebenenfalls weiteren Farbstoffen vermischt wird.

4. Verfahren nach Anspruch 3, dadurch gekennzeichnet, daß der Farbstoff der Formel I mit dem Farbstoff der Formel II im Gewichtsverhältnis 70 : 30 vermischt wird.

5. Verfahren zur Herstellung der in Anspruch 1 und/oder 2 genannten Farbstoffmischung, dadurch gekennzeichnet, daß p-Toluidin und o-Toluidin im Gewichtsverhältnis (80 bis 60) : (20 bis 40), diazotiert und auf 3-Hydroxy-2-naphthoesäure-p-anisidid der Formel III

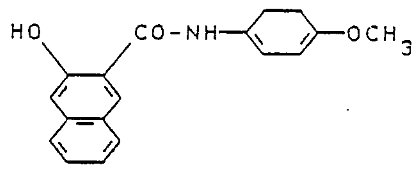

(III)

gekuppelt werden.

6. Verfahren nach Anspruch 5, dadurch gekennzeichnet, daß p-Toluidin und o-Toluidin im Gewichtsverhältnis 70 : 30 diazotiert und auf 3-Hydroxy-2-naphthoesäure-p-anisidid der Formel III gekuppelt werden.

7. Verfahren zum Färben und Bedrucken von hydrophoben Fasermaterialien sowie deren Mischungen mit Naturfasern oder Regeneratcellulosefasern nach an sich bekannten Färbe- und Druckverfahren, dadurch gekennzeichnet, daß die verwendete Farbflotte oder Druckpaste eine Farbstoffmischung nach der Anspruch 1 und/oder 2 enthält.

8. Verfahren nach Anspruch 7, dadurch gekennzeichnet, daß Polyestermaterialien gefärbt oder bedruckt werden.

9. Der Farbstoff der Formel II

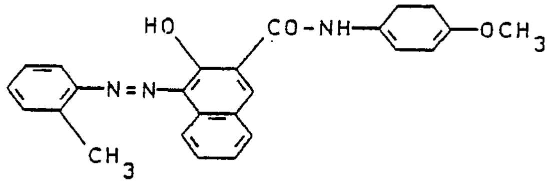

(II)

**Claims**

1. Mixture of monoazo dyestuffs, characterised in that it consists of the dyestuffs of the formula I

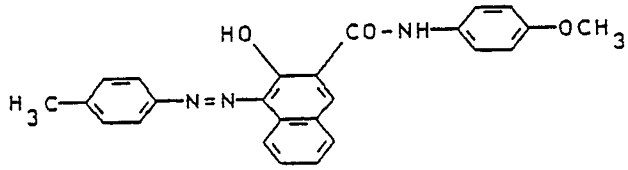

(I)

and of the formula II

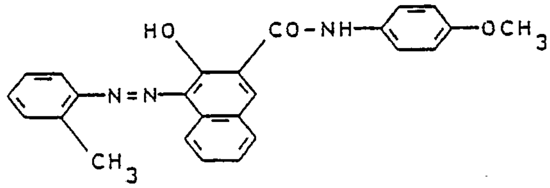

(II)

or contains these dyestuffs and in that the weight ratio of dyestuff I to dyestuff II is (80 to 60) : (20 to 40).

2. Mixture of monoazo dyestuffs according to Claim 1, characterised in that the weight ratio of dyestuff I to dyestuff II is 70 : 30.

3. Process for preparing the dyestuff mixture mentioned in Claim 1 and/or 2, characterised in that the dyestuff of the formula I

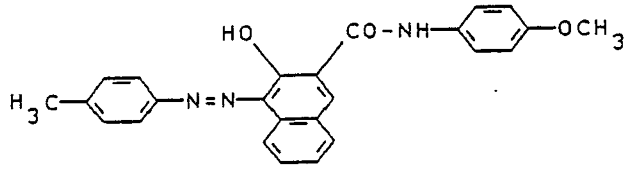

(I)

is mixed with the dyestuff of the formula II

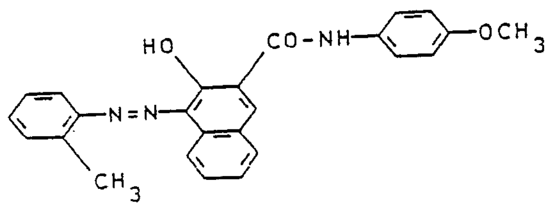

(II)

in a weight ratio of (80 to 60) : (20 to 40), in the absence or presence of standardising agents and/or auxiliaries and in the absence or presence of further dyestuffs.

4. Process according to Claim 3, characterised in that the dyestuff of the formula I is mixed with the dyestuff of the formula II in a weight ratio of 70 : 30.

5. Process for preparing the dyestuff mixture mentiond in Claim 1 and/or Claim 2, characterised in that p-toluidine and o-toluidine is diazotised in a weight ratio of (80 to 60) : (20 to 40) and coupled onto N-p-anisidide-3-hydroxy-2-naphthamide of the formula III

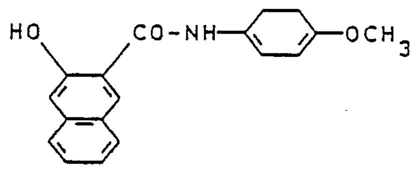

(III)

6. Process according to Claim 5, characterised in that p-toluidine and o-toluidine are diazotised in a weight ratio of 70 : 30 and coupled onto N-p-anisidide-3-hydroxy-2-naphthamide of the formula III.

7. Process for dyeing and printing hydrophobic fibre materials and their mixtures with natural fibres or regenerated cellulose fibres by dyeing and printing methods known per se, characterised in that the dyeing liquor or printing paste used contains a dyestuff mixture according to Claim 1 and/or 2.

8. Process according to Claim 7, characterised in that polyester materials are dyed or printed.

9. The dyestuff of the formula II

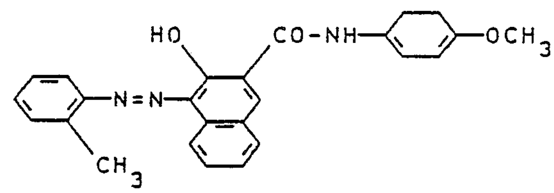

(II)

**Revendications**

1. Mélange de colorants monoazoïques caractérisé en ce qu'il contient les colorants suivants ou est constitué de ces colorants :
colorant de formule I

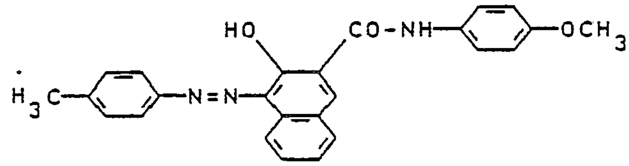

(I)

et colorant de formule II

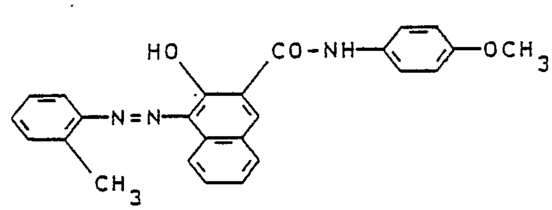

(II)

dans les proportions pondérales respectives des colorants I et II de 80 à 60 pour 20 à 40.

2. Mélange selon la revendication 1 caractérisé en ce que les proportions pondérales respectives des colorants I et II sont de 70 et 30.

3. Procédé de préparation d'un mélange de colorants selon la revendication 1 ou 2, procédé caractérisé en ce que l'on mélange le colorant de formule I :

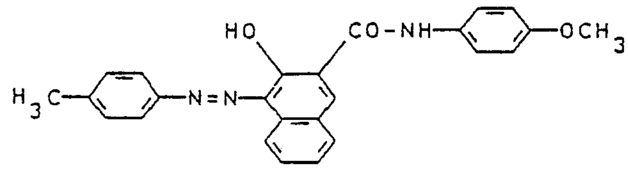

(I)

avec le colorant de formule II :

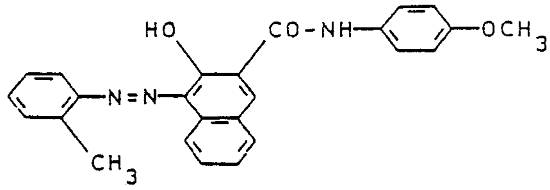

(II)

dans les proportions pondérales respectives de 80 à 60 pour 20 à 40, éventuellement avec des diluants et/ou adjuvants et le cas échéant avec d'autres colorants.

4. Procédé selon la revendication 3, caractérisé en ce que les proportions pondérales des colorants I et II sont de 70 et 30.

5. Procédé de préparation d'un mélange de colorants selon la revendication 1 ou 2, procédé caractérisé en ce que l'on diazote de la p-toluidine et de la o-toluidine dans les proportions pondérales respectives de 80 à 60 pour 20 à 40, et on copule le produit de la diazotation sur le p-anisidide de l'acide 3-hydroxy-2 naphtoïque de formule III :

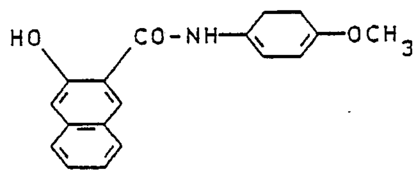

(III)

6. Procédé selon la revendication 5, caractérisé en ce que les proportions pondérales respectives de p-toluidine et de o-toluidine sont de 70 et 30, et on copule le produit de la diazotation sur le p-anisidide de l'acide 3-hydroxy-2-naphtoïque.

7. Procédé de teinture ou d'impression de matières fibreuses hydrophobes ainsi que de leurs mélanges avec des fibres naturelles ou des fibres de cellulose régénérée par les méthodes connues de teinture et d'impression, procédé caractérisé en ce que les bains de teinture ou les pâtes d'impression employées contiennent un mélange de colorants selon la revendication 1 ou 2.

8. Procédé selon la revendication 7 caractérisé en ce que l'on teint ou imprime des matières en polyesters.

9. Le colorant de formule II ci-dessous :

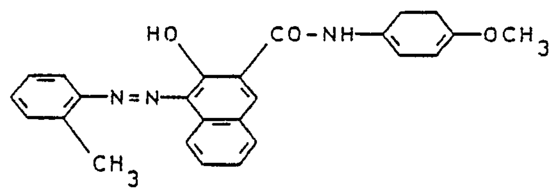

(II)